# EUROPÄISCHE PATENTSCHRIFT

(11) **EP 1 531 963 B1**
(45) Veröffentlichungstag und Bekanntmachung des Hinweises auf die Patenterteilung: **16.04.2008**
(21) Anmeldenummer: 03790753.2
(22) Anmeldetag: 25.08.2003
(51) Int. Cl.: B23K 26/073, B23K 26/40, C03B 33/037, C03B 33/08, G02B 5/00, B23K 26/067

(54) **VORRICHTUNG MIT EINER STRAHLFORMUNGSEINHEIT MIT ZWEI AXICON-LINSEN ZUM EINBRINGEN VON STRAHLUNGSENERGIE IN EIN WERKSTÜCK AUS EINEM SCHWACH ABSORBIERENDEN MATERIAL**
DEVICE COMPRISING A BEAM FORMATION UNIT COMPRISING TWO AXICON LENSES FOR INTRODUCING RADIATION ENERGY INTO A WORKPIECE CONSISTING OF A WEAKLY-ABSORBENT MATERIAL
DISPOSITIF POURVU D'UNE UNITE DE FORMATION DE FAISCEAU POSSEDANT DEUX LENTILLES AXICON PERMETTANT D'INTRODUIRE DE L'ENERGIE DE RAYONNEMENT DANS UNE PIECE CONSTITUEE D'UN METAL PEU ABSORBANT

(30) Priorität: 28.08.2002 DE 10240033
(43) Veröffentlichungstag der Anmeldung: 25.05.2005
(73) Patentinhaber: JENOPTIK Automatisierungstechnik GmbH, 07745 Jena (DE)
(72) Erfinder: STAUPENDAHL, Gisbert, 07751 Kunitz (DE); ACKER, Stefan, 07646 Waldeck (DE); WEISSER, Jürgen, 07743 Jena (DE)
(74) Vertreter: Schaller, Renate
(86) Internationale Anmeldenummer: PCT/DE2003/002853
(87) Internationale Veröffentlichungsnummer: WO 2004/020141

(56) Entgegenhaltungen:
- WO-A-02/48059
- FR-A- 2 641 968
- GB-A- 1 405 487
- GB-A- 2 139 613
- US-A- 5 256 853
- US-A- 6 004 487
- US-A1- 2001 028 385
- PATENT ABSTRACTS OF JAPAN vol. 1998, no. 14, 31. Dezember 1998 (1998-12-31) & JP 10 244386 A (HITACHI CONSTR MACH CO LTD), 14. September 1998 (1998-09-14) in der Anmeldung erwähnt

## Beschreibung

Die Erfindung betrifft eine Vorrichtung zum Einbringen von Strahlungsenergie in ein Werkstück aus einem Schwach absorbierenden Material gemäß dem Oberbegriff des Anspruchs 1, wie sie gattungsgemäß aus der WO 02/48059 A bekannt ist.

Das Einbringen leistungsstarker elektromagnetischer Strahlung in ein Werkstück aus einem nur schwach absorbierenden Material stellt noch immer ein zentrales Problem bei der Materialbearbeitung dar. Dabei nimmt insbesondere die Lasermaterialbearbeitung einen zentralen Platz bei entsprechenden Entwicklungen ein, da hier eine Reihe geeigneter Strahlungsquellen mit Eigenschaften zur Verfügung stehen, die einer großen Breite von Applikationen effizient angepasst werden können.
Häufig reicht die einfache Fokussierung der Strahlung auf die Werkstückoberfläche nicht aus, um die zur Verfügung stehende Energie auch wirklich effektiv nutzen zu können, d.h. sie örtlich und mengenmäßig optimal in das Werkstück einzubringen. So wurden eine Vielzahl von Verfahren und Anordnungen entwickelt, die jeweils den spezifischen Bearbeitungsaufgaben angepasst, einen optimalen Energieeintrag bewirken sollen. Im Wesentlichen bestimmt durch die unterschiedliche Bearbeitungsaufgabe (z. B. Trennen, Abtragen oder Perforieren) sowie die unterschiedliche Geometrie und das unterschiedliche Material des zu bearbeitenden Werkstückes sind diese Verfahren und Anordnungen darauf gerichtet, die Strahlung unterschiedlich zu formen und zu führen.

Unter der Vielzahl der Lösungen des Standes der Technik werden nur solche Lösungen als zur Erfindung relevant betrachtet, die entweder das Strahlenbündel in einen Strahlungsring formen und/oder die die Strahlung mehrfach durch das Werkstück führen.

Die Formung eines Strahlungsringes ergibt sich bei den aus dem Stand der Technik bekannten Lösungen ausschließlich aus dem Anliegen, eine Werkstückoberfläche kreislinienförmig zu bestrahlen, um z. B. eine Linse auszuschneiden. Idealerweise wird die Strahlung ringförmig auf die Werkstückoberfläche fokussiert. Um das Strahlenbündel in einen Strahlungsring zu transformieren, ist es bekannt, ein Axicon zu verwenden.
So wird in der US 4,456,811 (bzw. EP 0 189 027 A 1) mittels einer Kombination Sammellinse-Axicon und konischer Spiegel erreicht, dass der Laserstrahl in einen fokussierten Ring in der Weise geformt wird, dass eine gekrümmte, rotationssymmetrische Werkstückoberfläche senkrecht von diesem Fokusring getroffen und effektiv bearbeitet wird.
Die US 4,623,776 beschreibt eine ganz analoge Anordnung, bei der mittels des erzeugten fokussierten Strahlungsringes z. B. Plastiklinsen optimal ausgeschnitten werden können.
Der reinen Grundaufgabe der Kombination Axicon-Fokussierlinse, nämlich der Erzeugung eines ebenen fokussierten Strahlungsringes, sind die Patentschriften PS 28 21 883 (US 4,275,288) und US 3,419,321 gewidmet, wobei der erzeugte Strahlungsring z. B. zum Ausschneiden von Löchern mit definiertem Durchmesser, zum Schweißen solcher Konturen o. ä. Aufgaben der Lasermaterialbearbeitung eingesetzt wird.
Die aufgezeigten Lösungen haben mit dem Gegenstand der vorliegenden Erfindung nur soweit etwas gemeinsam, dass mittels eines Axicons ein Strahlenbündel geformt wird.
Relevanter von der Aufgabenstellung her sind die Lösungen, bei denen Maßnahmen getroffen werden, die zur Erhöhung des Energieeintrages das Strahlenbündel mehrfach durch das Werkstück führen, um auch Materialien bearbeiten zu können, die die Strahlung beträchtlich transmittieren und nur geringfügig absorbieren.
So wird in der Schrift GB 2 139 614 A eine Anordnung beschrieben, deren Hauptziel einerseits eine spezielle Formung der auf das Werkstück fokussierten Laserstrahlung ist, womit die definierte Ausbildung eines Spannungsrisses beim Schneiden von Glas gefördert wird, andererseits durch einen auf der Rückseite des Werkstückes angeordneten zweiten Fokussierspiegel ein zweiter fokussierter Durchgang durch das gleiche Wechselwirkungsvolumen im Werkstück erreicht wird. Durch den zweifachen Durchlauf der Laserstrahlung durch das Werkstück wird die Menge der absorbierten Strahlungsenergie erhöht.

In der in dem Patent Abstracts of Japan veröffentlichten Patentschrift Nummer 10 244 386 A wird ebenfalls ein Verfahren zum Trennen von Werkstücken durch Erzeugung eines thermischen Spannungsrisses geschildert. Dabei wird der Laserstrahl von dem Werkstück gleichzeitig oder zeitlich aufeinanderfolgend entlang der Trennzone im Wesentlichen an der gleichen Stelle oder an zueinander gering beabstandeten Stellen wenigstens zweimal transmittiert. Bevor der Laserstrahl auf das Werkstück auftrifft, durchstrahlt er einen halbdurchlässigen Spiegel. Der transmittierende Strahlungsanteil durchsetzt das Werkstück, wird von einem unterhalb des Werkstückes angeordneten Spiegel in das Werkstück zurückreflektiert und trifft erneut auf den halbdurchlässigen Spiegel, der einen Strahlungsanteil auf das Werkstück zurückreflektiert. Das zwischen diesem Spiegel und einem zweiten Spiegel angeordnete Werkstück wird so wiederholt durchstrahlt. Allerdings sind die Energieverluste enorm. Die Strahlungsanteile, die vom halbdurchlässigen Spiegel beim ersten Auftreffen der Strahlung reflektiert werden, und die Strahlungsanteile, die beim erneuten Auftreffen auf den halbdurchlässigen Spiegel transmittieren, gehen erstens der Werkstoffbearbeitung verloren und werden zweitens in die Strahlungsquelle zurückreflektiert.

Aus dem Stand der Technik ist keine Lösung bekannt, mit der die zur Verfügung stehende Strahlungsenergie quasi vollständig in einem kleinen Wechselwirkungsvolumen eines teiltransparenten Werkstückes absorbiert werden kann. Diese Tatsache erklärt sich insbesondere dadurch, dass ein optisches Element, welches die Strahlung zu diesem Zweck wenigstens ein zweites Mal in das Wechselwirkungsvolumen zurückreflektiert, immer im optischen Strahlengang zwischen der Strahlungsquelle und dem Werkstück steht. Da es kein optisches Element einschließlich optischer Schichten gibt, die eine unveränderte Strahlung in einer Durchtrittsrichtung vollständig transmittiert und in der anderen vollständig reflektiert, sind Energieverluste nicht zu vermeiden. Es ist dem Fachmann klar, dass praktisch jedes in einem Strahlengang stehende optische Element immer auch Verluste, wenn auch nur geringe, zur Folge hat. Hoch sind diese Verluste immer dann, wenn das Element für Strahlung aus unterschiedlicher Richtung kommend, mal reflektierend und mal transmittierend ist, wie bei einem halbdurchlässigen Spiegel oder einem Teilerwürfel.

Der Erfindung liegt die Aufgabe zu Grunde, eine Vorrichtung zu schaffen, mit der relativ schwach absorbierende, weitgehend transparente Werkstoffe mittels elektromagnetischer Strahlung, vorzugsweise der Strahlung leistungsstarker Laser, so bearbeitet werden können, dass
- durch Vervielfachung der Einzelabsorptionen letztendlich eine hohe Gesamtabsorption im Werkstoff und damit eine effiziente Ausnutzung der Strahlungsenergie für den Bearbeitungsprozess erfolgt, wobei zu gewährleisten ist, dass die Strahlungsenergie in ein möglichst kleines Wechselwirkungsvolumen (Volumen des Werkstückes, über welches die Strahlung absorbiert wird) eingebracht wird, um eine Bearbeitung mit hoher Präzision zu erreichen und
- die Rückkopplung von nichtabsorbierter Strahlung in die Strahlungsquelle weitgehend vermieden wird.

Die erfindungsgemäße Aufgabe wird mit einer Vorrichtung gemäß Anspruch 1 gelöst.

Vorteilhafte Ausführungsformen sind in den Unteransprüchen 2 bis 5 beschrieben.

Das Wesen der erfindungsgemäßen Vorrichtung wird entscheidend durch die Wirkung der zugehörigen Strahlformungseinheit bestimmt, was nachfolgend erläutert werden soll.
Es ist dem Fachmann klar, dass ein optischer Strahl ein Medium (Werkstück) nur dann mehrfach auf dem gleichen optischen Weg durchlaufen kann (Voraussetzung, um die Strahlungsenergie in ein kleines Wechselwirkungsvolumen einzubringen), wenn beidseitig des Mediums ein Reflektor angeordnet ist, das heißt zwingend ein erster Reflektor in Strahlungsrichtung dem Werkstück vorgeordnet ist. Dieser erste Reflektor hat für die erstmalige Einkopplung der Strahlung in das Werkstück keine Funktion und sollte die Strahlung daher möglichst unbeeinflusst passieren lassen. Erst nachdem die Strahlung nach Reflexion am zweiten Reflektor und dem zweitem Durchlaufen des Werkstückes erneut auf diesen ersten Reflektor auftrifft, soll er die auftreffende Strahlung möglichst vollständig reflektieren.
Hier setzt die Grundidee der Erfindung an. Damit der erste Reflektor die Strahlung vor dem ersten Auftreffen auf das Werkstück praktisch unbeeinflusst lässt, soll das Strahlenbündel so geformt werden, dass der erste Reflektor zwar im Strahlengang steht, das Strahlenbündel ihn aber nicht durchsetzt, sondern umgibt. Diese Strahlformung wird mit einer Strahlformungseinheit verwirklicht, die das von der Strahlungsquelle kommende Strahlenbündel so formt, dass in Strahlungsrichtung hinter dieser Strahlformungseinheit die gesamte Strahlung in einem ersten Fokuspunkt gesammelt wird und anschließend so divergiert, dass sie sich als Ring mit einem definierten, strahlungsfreien Zentralbereich, dessen Durchmesser linear mit dem Abstand vom ersten Fokuspunkt anwächst, ausbreitet. In diesem strahlungsfreien Zentralbereich ist ein erster Resonatorspiegel angeordnet, der zu einer der Strahlformungseinheit nachgeordneten Resonatoreinheit gehört. Die Resonatoreinheit formt und führt die mit den beschriebenen Ausbreitungseigenschaften definierte Strahlung so, dass der erste Fokuspunkt in einen zweiten Fokuspunkt in das Werkstück abgebildet wird und somit die Strahlungsenergie punktförmig in ein kleines Wechselwirkungsvolumen konzentriert wird, welches vielfach, mindestens aber vierfach von der Strahlung durchsetzt wird und auf diese Weise die Summe der vom Werkstück absorbierten Strahlung auf ein ebensolches Vielfaches der Einzelabsorption gesteigert wird.
Um die Strahlung in einem ersten Fokuspunkt zu sammeln und anschließend so aufzuweiten, dass ein Strahlungsring entsteht, genügt es nicht, mit einer Fokussierlinse und nur einem Axicon zu arbeiten, wie es bei Lösungen bekannt aus dem Stand der Technik üblich ist, die regelmäßig auf der Werkstückoberfläche einen Fokusring erzeugen sollen. Diese Lösungen sind dadurch charakterisiert, dass der Kreuzungspunkt der Zentralstrahlen des vom Axicon erzeugten Ringes und der Fokuspunkt der einzelnen Strahlungssegmente dieses Ringes, in Richtung der Strahlausbreitung betrachtet, gegeneinander verschoben sind. Passt man die Parameter der Fokussierlinse, die Axiconparameter und deren Abstand zueinander so an, dass sich doch alle Strahlen in einem Punkt treffen, ist die Wirkung letztlich die einer adäquaten Einzellinse, d. h. die von diesem Punkt ausgehenden Strahlen bilden keinen Ring mit einem proportional zum Abstand vom Fokus größer werdenden strahlungsfreien zentralen Loch. Dieses Problem kann durch die Einführung eines zweiten Axicons in den Strahlengang gelöst werden. Die Gesamtwirkung dieser drei Bauelemente (zwei Axicons + Fokussierlinse) ist dann Folgende: Das erste Axicon sorgt für die gewünschte Ringbildung. Die Fokussierlinse bewirkt die Sammlung der Strahlen in dem bekannten Ringfokus, der bei Überlagerung einer geeigneten Konvergenz, die das zweite Axicon liefert, in den geforderten ersten Fokuspunkt entartet. Dieser erste Fokuspunkt ist nun tatsächlich Ausgangspunkt einer sich ringförmig ausbreitenden Strahlung mit einem echten strahlungsfreien Zentralbereich. Diese spezifische Strahlformung ermöglicht es, mittels der erfindungsgemäßen Resonatoreinheit das eigentliche Ziel der Vorrichtung zu realisieren. Da nämlich hinter der Strahlformungseinheit alle Strahlungsanteile aus einem Punkt, nämlich dem ersten Fokuspunkt kommen, können sie durch nachfolgende Sammellinsen bzw. Hohlspiegel immer wieder "refokussiert", d.h. in einem weiteren Fokuspunkt gesammelt werden, wobei stets der Ringcharakter auf dem Strahlweg zwischen den Fokuspunkten erhalten bleibt. Dies ist die Voraussetzung dafür, dass die nachgeordnete Resonatoreinheit ihrer Funktion gerecht werden kann. Sie ist im Wesentlichen wie folgt aufgebaut: Eingangselement der Resonatoreinheit ist eine Sammellinse, die in einer solchen Entfernung vom ersten Fokuspunkt angeordnet ist, dass der strahlungsfreie Zentralbereich des Strahlenbündels groß genug ist, um dort einen Hohlspiegel, er soll als erster Resonatorspiegel fungieren, anzuordnen, ohne Teile des Strahlenbündels abzuschirmen. Das Strahlenbündel wird demnach beim Eintreten in die Resonatoreinheit vollständig über diese Sammellinse geführt, ohne dass der erste Resonatorspiegel dieses Strahlenbündel beeinflusst. Die erste Sammellinse fokussiert die Strahlung in das Wechselwirkungsvolumen des zu bearbeitenden Werkstückes, beispielsweise einer Glasplatte. Unmittelbar hinter dem Werkstück, dessen Dicke mehrere mm betragen kann, ist ein Spiegel mit zentralem Loch angeordnet. Letzteres muss groß genug sein, um das hinter dem Werkstück wieder divergierende Strahlenbündel verlustfrei passieren zu lassen. Das Strahlenbündel trifft auf dem weiteren optischen Weg auf einen Fokussierspiegel, der in einer solchen Entfernung vom Spiegel mit zentralem Loch angeordnet ist, dass einerseits auf dem Fokussierspiegel wiederum ein ausreichend großer strahlungsfreier Zentralbereich vorhanden ist, der die Positionierung eines weiteren kleinen Hohlspiegels, der als zweiter Resonatorspiegel fungiert, ermöglicht, andererseits durch geeignete Wahl des Krümmungsradius des Fokussierspiegels erreicht wird, dass das nach der Reflexion am Fokussierspiegel in Richtung Spiegel zurücklaufende und nun wieder konvergierende Bündel vom Spiegel vollständig reflektiert und in einem dritten Fokuspunkt gesammelt wird, der zwischen dem Spiegel und dem zweiten Resonatorspiegel im Allgemeinen in der Nähe des zweiten Resonatorspiegels liegt. Das Strahlenbündel trifft nun mit relativ kleinem Durchmesser auf den zweiten Resonatorspiegel, dessen Krümmungsradius so beschaffen ist, dass die Strahlung wieder fokussiert wird und zwar wieder in das Wechselwirkungsvolumen im Werkstück. Das nach der Reflexion am zweiten Resonatorspiegel bereits sehr schlanke Bündel durchsetzt das Werkstück nun ein zweites Mal und läuft in Richtung zum ersten Resonatorspiegel. Der Krümmungsradius des ersten Resonatorspiegels ist so angepasst, dass eine abermalige Reflexion erfolgt und zwar genau in den dritten Fokuspunkt. Damit trifft das Bündel so auf den zweiten Resonatorspiegel, dass die Ausgangsbedingungen des "ersten Resonatorumlaufes" wieder gegeben sind, nur mit verringertem Bündeldurchmesser. Auf diese Weise löst die erfindungsgemäße Anordnung die Aufgabe einer resonatorähnlichen Wirkung, d. h. einen vielfachen Durchgang der Strahlung durch das Wechselwirkungsvolumen im Werkstück. Das Bündel "läuft sich tot" durch die Absorption im Werkstück, ohne dass Strahlungsanteile in die Strahlungsquelle zurückgelangen.
Der Wirkungsgrad der Anordnung, d. h. das Verhältnis von im Werkstück deponierter Strahlungsenergie zu der von der Strahlungsquelle gelieferten Eingangsenergie wird nur durch die unvermeidlichen prinzipiellen Verluste, insbesondere die Absorption an den optischen Elementen, Beugungsverluste und Verluste durch Abbildungs- und Justierfehler bestimmt und sollte auch bei relativ schwach absorbierenden Werkstoffen (mit einer Absorption kleiner 10% pro Durchgang) mehr als 50% betragen.
Bei dem geschilderten Strahlverlauf wird in Kauf genommen, dass bei jedem dem ersten Durchgang folgenden ungeradzahligen Durchgang des Strahlenbündels durch das Werkstück das Strahlenbündel nicht innerhalb des Werkstückes (zweiter Fokuspunkt) und damit im eigentlichen Wechselwirkungsvolumen, sondern nahe dem Werkstück (im dritten Fokuspunkt) fokussiert wird, da nur auf diese Weise das stabile Resonanzverhalten zwischen dem ersten und dem zweiten Resonatorspiegel erreicht werden kann. Dies ist für die Mehrzahl der Anwendungen jedoch nicht abträglich, insbesondere auch deshalb, weil der Bündeldurchmesser von Durchgang zu Durchgang kleiner wird und bei geeigneter Dimensionierung der Optikparameter in jedem Falle in der Größenordnung 1 mm und darunter liegt. Die nicht scharf fokussierten Strahlungsanteile können sich bei bestimmten Arbeitsaufgaben sogar sehr günstig auswirken, da sie eine tempernde bzw. den Temperaturgradienten abbauende Wirkung haben können.
Ohne Probleme lässt sich die Geometrie der Resonatoreinheit auch modifizieren, so dass eine optimale Anpassung an die Werkstückeigenschaften, speziell an das Absorptionsverhalten und an das gewünschte Bearbeitungsergebnis möglich ist. So kann z. B. die Brennweite des ersten Resonatorspiegels so gewählt werden, dass das vom zweiten Resonatorspiegel kommende Bündel wieder in das Wechselwirkungsvolumen fokussiert wird, also praktisch in sich zurückläuft. Nach den Reflexionen an dem zweiten Resonatorspiegel, dem Spiegel und dem Fokussierspiegel wird dann sogar ein viertes Mal das Werkstück fokussiert durchlaufen. Ist die Absorption nicht allzu niedrig (≥ 20%), ist dann bereits der Großteil der Strahlungsenergie in der Bearbeitungszone deponiert. Die Reststrahlung, die im Wechselwirkungsvolumen nicht absorbiert wird, könnte dann allerdings in die Strahlungsquelle zurückkoppeln, wenn keine besonderen Vorkehrungen getroffen werden. Dieses Problem kann jedoch relativ einfach dadurch gelöst werden, indem in den Strahlweg zwischen Strahlquelle und der Strahlformungseinheit eine Strahlungsentkopplungseinheit gesetzt wird, die das zurücklaufende Licht praktisch vollständig eliminiert. Deren effiziente Funktion setzt allerdings Strahlung voraus, die linear polarisiert aus der Strahlungsquelle kommt. Die Strahlungsentkopplungseinheit funktioniert dann folgendermaßen: Zunächst durchläuft die von der Strahlungsquelle kommende, linear polarisierte Strahlung einen Polarisator, der auf vollen Durchgang eingestellt ist, d. h. das Strahlenbündel erleidet nur minimale Verluste. Anschließend wird die Strahlung beim Durchgang durch eine λ/4-Platte in zirkular polarisierte Strahlung transformiert. Diese Transformation ist für zahlreiche Anwendungen erforderlich oder zumindest sinnvoll, da beim Einsatz zirkular polarisierter Strahlung zur Lasermaterialbearbeitung die unerwünschte Richtungsabhängigkeit des Bearbeitungsergebnisses verschwindet. Die Zirkularpolarisation bleibt auf dem weiteren Strahlweg weitgehend erhalten, auch der zurückkommende Anteil besitzt noch diese Eigenschaft. Er durchläuft nun die Strahlungsentkopplungseinheit in umgekehrter Richtung mit dem Ergebnis, dass die λ/4-Platte den Polarisationsvektor so "weiterdreht", dass aus dem zirkular polarisierten wieder linear polarisiertes Licht entsteht, allerdings mit einer um 90° verdrehten Polarisationsebene gegenüber dem eingestrahlten elektromagnetischen Strahlungsfeld. Für diese Strahlung steht nun aber der Polarisator in Sperrrichtung, d.h. eine Rückkopplung in die Strahlungsquelle wird verhindert.
Generell kann bei der erfindungsgemäßen Anordnung durch Verschieben des Werkstückes längs der optischen Achse bei vorgegebenen optischen Parametern der Ort mit den günstigsten Verhältnissen im Hinblick auf Intensität, Strahldurchmesser und Intensitätsverteilung gesucht und in relativ weiten Grenzen frei gewählt werden. Dies ist z.B. eine wichtige Option beim Trennen von Gläsern mittels Spannungsriss.
Speziell für diese Aufgabenstellung kann die Erzeugung eines Startrisses notwendig sein. Dafür liefert die Erfindung z.B. folgende 3 Möglichkeiten.
1.) Man wählt eine Strahlungsquelle, die neben dem kontinuierlichen Betrieb einen Impulsbetrieb mit stark überhöhter Leistungsspitze ermöglicht (z. B. durch Güteschaltung eines Lasers), um zu Beginn des Bearbeitungsprozesses mit einem solchen Impuls im Fokusvolumen eine gezielte feine "Zerstörung" des Werkstoffgefüges, die den Startriss liefert, zu bewirken. Anschließend wird die Strahlungsquelle auf Normalbetrieb umgeschaltet und der Startriss in der gewünschten Weise, d. h. mit dem Ziel eines definierten Trennvorganges, als Spannungsriss durch das Werkstück getrieben.
2.) Da die erfindungsgemäße Anordnung problemlos eine rasche Variation der relativen Lage von Fokus und Werkstück ermöglicht, kann z. B. auch so vorgegangen werden, dass (bei kontinuierlich arbeitender Strahlungsquelle) zu Beginn der Bearbeitung das Werkstück genau im Fokus liegt. Bei ausreichender Strahlungsleistung kann dann wieder die gewünschte feine Zerstörung des Werkstoffgefüges, also der Startriss erzeugt werden. Für die weitere Bearbeitung, bei der Schmelzen und Verdampfen unerwünscht sind, wird das Werkstück so weit aus dem Fokusbereich herausgefahren, bis optimale Intensitätsverhältnisse für das Trennen mittels Spannungsriss erreicht sind.
3.) Eine besonders flexible Variante ergibt sich, wenn zur Erzeugung des Startrisses oder auch einer Folge solcher "Startpunkte" mit dem Ziel einer genauen Konturvorgabe auch bei komplizierten Werkstückformen eine Zusatzstrahlungsquelle verwendet wird. Dies sollte vorzugsweise ein gepulster Laser sein. In einer günstigen Anordnung kann z. B. unmittelbar vor dem Werkstück ein Umlenkspiegel angeordnet werden, der für die eigentliche (von der ersten Sammellinse kommende) Arbeitsstrahlung transparent ist, die Strahlung des zweiten Lasers jedoch vollständig reflektiert. Letztere wird über eine 90° Umlenkung an diesem Umlenkspiegel scharf fokussiert auf das Werkstück gelenkt. Die Zusatzstrahlungsquelle und die Fokussieroptik für deren Strahlung sind dabei seitlich außerhalb des Hauptstrahlenganges angeordnet. Durch geeignete Justierelemente, die z. B. mittels Stellmotoren auch während des Bearbeitungsprozesses in Aktion treten können, ist es möglich, die unterschiedlichsten gewünschten relativen Positionen zwischen diesem scharfen Fokus und dem eigentlichen Wechselwirkungsvolumen einzustellen. So kann z. B. während des Bearbeitungsprozesses die Richtung des Spannungsrisses gezielt beeinflusst werden.
   Beim Trennen von Glas mittels Nd:YAG- oder Diodenlasern bietet sich z. B. als Zusatzstrahlungsquelle ein kleiner TEA-CO₂-Laser an, dessen Strahlung von Gläsern stark absorbiert wird. Ein auf die Oberfläche der Glasprobe scharf fokussierter Puls eines solchen Lasers reicht dann aus, um den gewünschten Startriss zu erzeugen.

Für die erfindungsgemäße Vorrichtung eröffnen sich weitere neuartige Anwendungen, die hier nur erwähnt, jedoch nicht genauer beschrieben werden sollen. So kann im dritten Fokuspunkt z.B. ein nichtlinearer optischer Kristall angeordnet werden, mit dessen Hilfe höhere Harmonische des Originalstrahls erzeugt werden. Wegen der Resonatoranordnung und der relativ hohen Intensität in diesem dritten Fokuspunkt sind hohe Umwandlungsraten möglich. Auf diese Weise könnte man das Werkstück sowohl mit der Grundwelle der Strahlung als auch mit einer höheren Harmonischen bearbeiten, was zu vorteilhaften Effekten führen kann.

Sehr ausführlich wurde die Ausführung einer erfindungsgemäßen Vorrichtung beschrieben, bei der ein erster Resonatorspiegel im strahlungsfreien Zentralbereich steht. Für andere Verwendungen der Strahlformungseinheit können andere optische Elemente anstelle dieses ersten Resonatorspiegels angeordnet werden. Z.B. könnte ein Umlenkspiegel an dieser Stelle stehen, der nunmehr kein halbdurchlässiger Spiegel sein muss, sondern mit einer hochreflektierenden Beschichtung die auftreffende Strahlung maximal reflektiert. Auf diese Weise kann die verlustfreie Überlagerung mehrerer Strahlenbündel verlustfrei gelöst werden.

Die Erfindung soll nachstehend anhand von in den Zeichnungen dargestellten Ausführungsbeispielen näher erläutert werden. Es zeigen:
Fig. 1 Strahlenverlauf durch ein Axicon (Stand der Technik)
Fig. 2 Strahlenverlauf durch eine Sammellinse und ein Axicon (Stand der Technik)
Fig. 3 Strahlenverlauf durch eine Strahlformungseinheit, bestehend aus zwei Axicons und einer Sammellinse , wie sie in Fig. 6 als Baugruppe 4 einer erfindungsgemäßen Vorrichtung dargestellt ist
Fig. 4 Ausbreitung des Strahlungskegels hinter einer Strahlformungseinheit gemäß Fig. 3
Fig. 5 Resonatoreinheit mit detailliertem Strahlengang, wie sie in Fig. 6 als Baugruppe 5 einer erfindungsgemäßen Vorrichtung dargestellt ist
Fig. 6 Vorrichtung mit Strahlungsquelle, Strahlformungseinheit und Resonatoreinheit gemäß der Erfindung
Fig. 7 Entkopplungseinheit
Fig. 8 Resonatoreinheit mit Zusatzstrahlungsquelle zur Startrisserzeugung

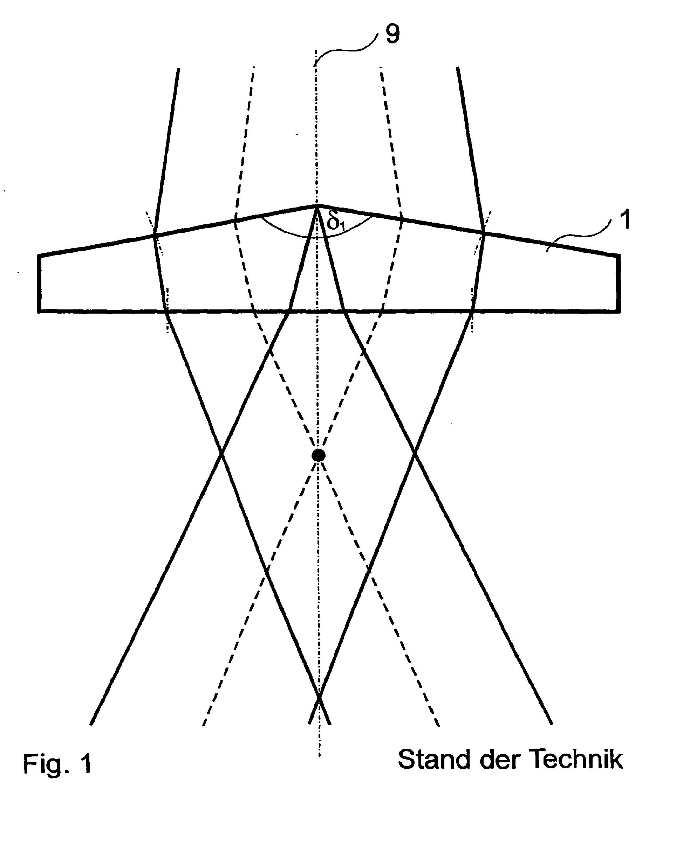

Eine erfindungsgemäße Vorrichtung besteht im Wesentlichen aus einer Strahlungsquelle 6, einer Strahlformungseinheit 4 und einer Resonatoreinheit 5, wobei die zwei eingesetzten Axicons in der Strahlformungseinheit 4 eine zentrale Funktion einnehmen. Zum einfachen Verständnis der Erfindung illustriert Fig. 1 deshalb zunächst die Grundfunktion eines einzelnen Axicons 1, das durch den Kegelwinkel δ₁ charakterisiert ist. Das einfallende Strahlenbündel, das als leicht divergent und rotationssymmetrisch bei z. B. gauss- oder rechteckförmigem (Top-Hat) Intensitätsquerschnitt angenommen wird, trifft genau zentriert und orthogonal die strahlformende Seite (kegelförmige Fläche) des ersten Axicons 1. Die Brechung an dessen kegelförmiger Fläche bewirkt, dass die Strahlung das erste Axicon 1 als divergierender Ring verlässt. Die Zentralstrahlen (als Strichlinie dargestellt) kreuzen sich in einem auf der optischen Achse 9 (als Strich-Punkt-Linie dargestellt) liegenden Punkt, wobei immer die Rotationssymmetrie des Strahlenbündels zu beachten ist.

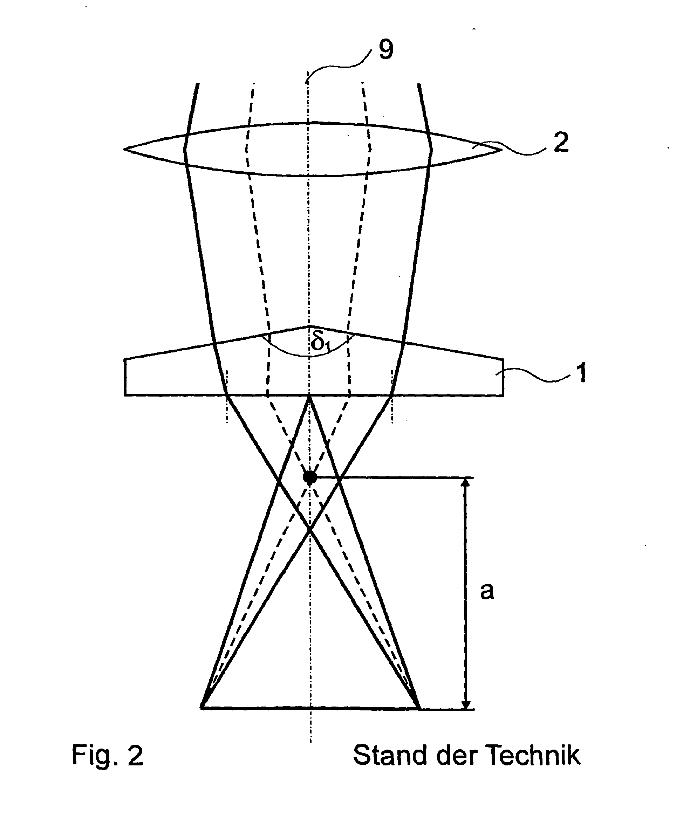

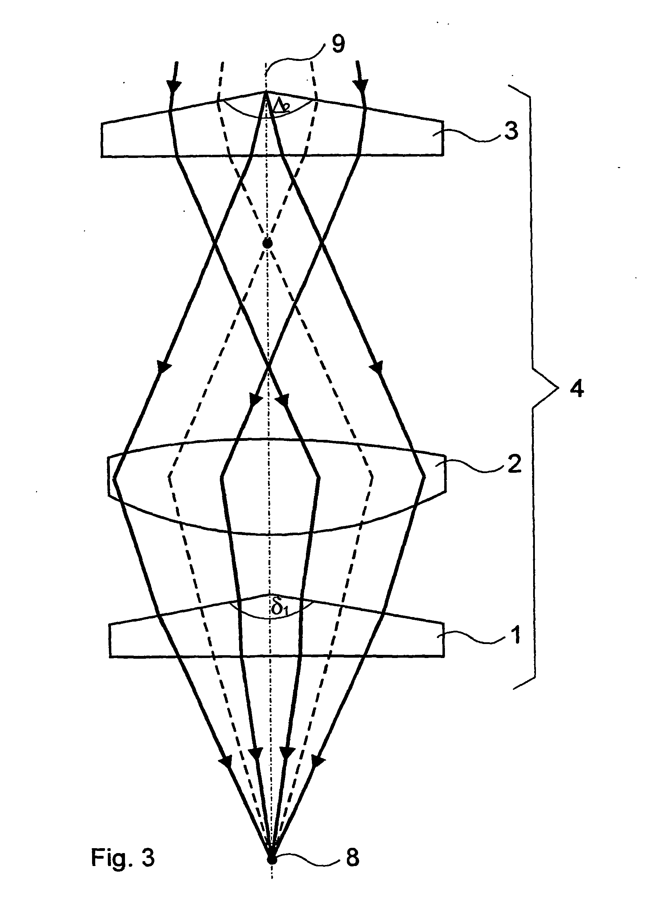

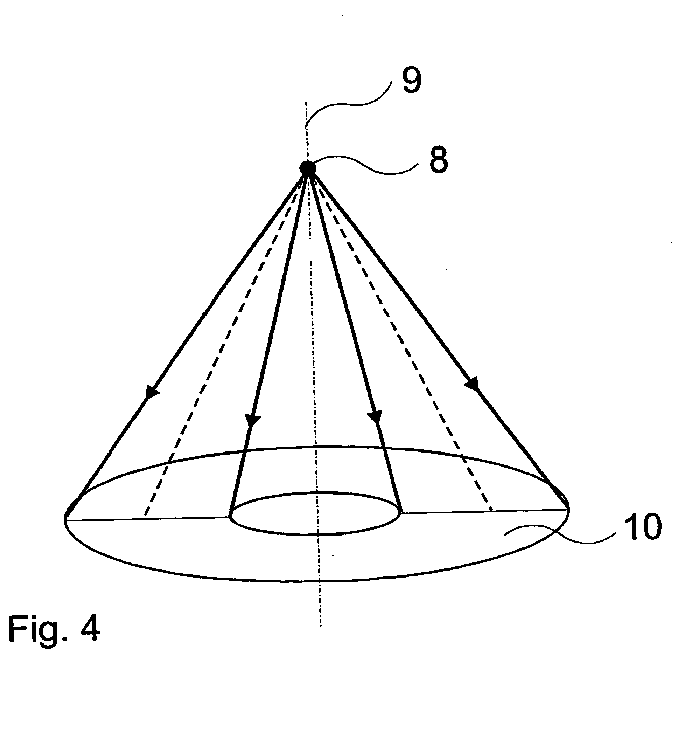

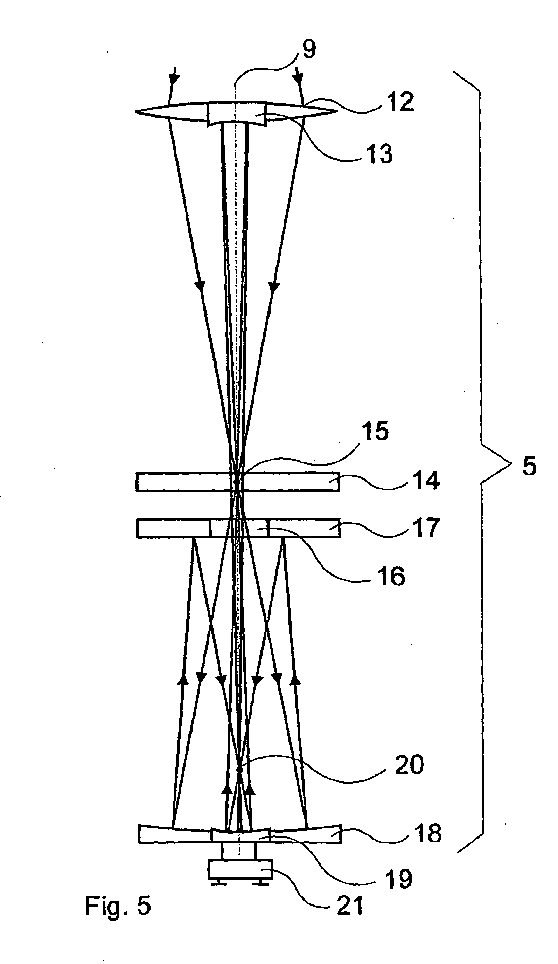

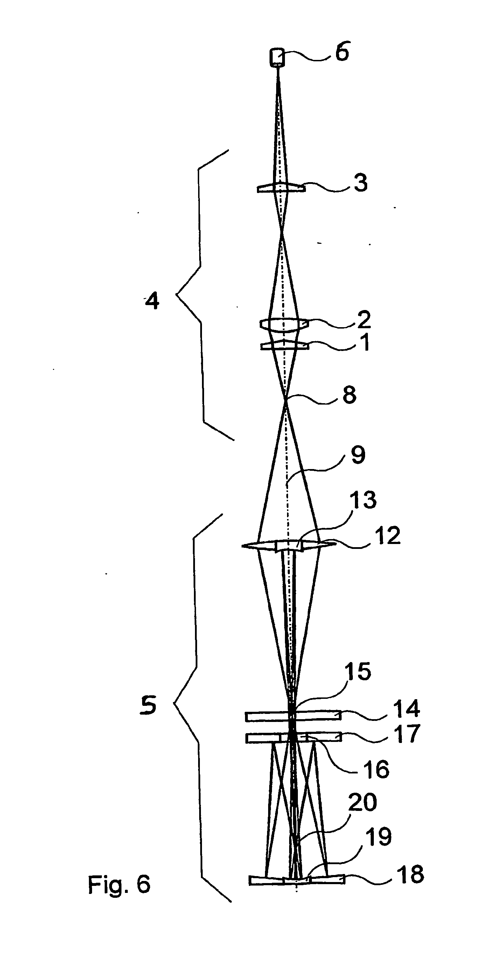

Fig. 2 zeigt eine Anordnung für einen typischen, aus dem Stand der Technik bekannten Verwendungsfall eines ersten Axicons 1, nämlich zur Erzeugung eines Ringfokus. Dazu wird dem ersten Axicon 1 eine Fokussierlinse 2 vorgeschaltet, die aus einem Strahlenbündel, wie es in Fig. 1 auf das erste Axicon 1 trifft, ein konvergentes Strahlenbündel formt. Durch die bereits anhand von Fig. 1 dargelegte Wirkung des ersten Axicons 1 ergibt sich nach dessen Durchlaufen eine konvergente Ringstrahlung, deren Zentralstrahlen sich wieder in einem Punkt auf der optischen Achse 9 des ersten Axicons 1 schneiden. Entsprechend der Brennweite der Fokussierlinse 2 entsteht in einer definierten Ebene ein Ringfokus oder auch fokussierter Strahlungsring 10. Unabhängig von den Parametern der Fokussierlinse 2 und denen des ersten Axicons 1 haben der Schnittpunkt der Zentralstrahlen und der Ringfokus immer einen Abstand a zueinander.
Für die Funktion der erfindungsgemäßen Vorrichtung ist es jedoch erforderlich, dass a gegen Null geht, was nichts anderes bedeutet, als dass der fokussierte Strahlungsring 10 zu einem Fokuspunkt entartet, der mit dem Schnittpunkt der Zentralstrahlen zusammenfällt. Diese erste Forderung in Verbindung mit der zweiten Forderung, dass nach diesem Fokuspunkt die Strahlung wieder als divergenter Ring mit strahlungsfreiem Zentralbereich weiterläuft, kann nun durch die erfindungsgemäße Vorschaltung eines zweiten Axicons 3 erreicht werden, wie in Fig. 3 dargestellt.
Das erste Axicon 1, die Fokussierlinse 2 und das zweite Axicon 3 bilden gemeinsam die Strahlformungseinheit 4, die mit einer an späterer Stelle beschriebenen Resonatoreinheit 5 und einer Strahlungsquelle 6 auf einer gemeinsamen optischen Achse 9 angeordnet, die erfindungsgemäße Vorrichtung bestimmt. Die gesammte Vorrichtung gemäß der Erfindung ist in Fig. 6 dargestellt, wird jedoch anhand ihrer wesentlichen Baugruppen, Strahlformungseinheit 4 in Fig. 3 und Resonatoreinheit 5 in Fig. 5 dargestellt, beschrieben.
Das zweite Axicon 3 mit einem Kegelwinkel δ₂ sorgt dafür, dass das einfallende Strahlenbündel, wie es zu Fig. 1 näher erläutert wurde, zunächst so vorgeformt wird, dass es bereits ringförmig auf die Fokussierlinse 2 trifft, wodurch erreicht wird, dass das nach der Fokussierlinse 2 konvergente Strahlenbündel bereits in Ringform mit einem strahlungsfreien Zentralbereich auf das erste Axicon 1 trifft und durch dessen Wirkung schließlich so gebrochen wird, dass das gesamte konvergente ringförmige Strahlenbündel in definierter Entfernung hinter dem ersten Axicon 1 in einem ersten Fokuspunkt 8 fokussiert wird und sich anschließend als divergenter Strahlungsring 10 mit einem größer werdenden strahlungsfreien Zentralbereich öffnet. Die Keilwinkel δ₁ des ersten Axicons 1 und δ₂ des zweiten Axicons 3 sowie deren Abstände zueinander und zur Fokussierlinse 2 werden mit der Brennweite der Fokussierlinse 2 so abgestimmt, dass der gewünschte Strahlengang entsteht.
Die Ausbreitung des Strahlenbündels nach dem gemeinsamen Schnittpunkt aller Strahlen im ersten Fokuspunkt 8 zeigt noch einmal Fig. 4. Wie bereits dargelegt, ist der erste Fokuspunkt 8 Ausgangspunkt eines sich ringförmig mit einer Divergenz ausbreitenden Strahlenbündels. Im Unterschied zu den vorher beschriebenen Figuren, in denen die Strahlenbündel jeweils im Längsschnitt durch das optische System durch Zentral- und Randstrahlen dargestellt sind, ist in Fig. 4 das ringförmige Strahlenbündel in einem Querschnitt orthogonal zur optischen Achse 9 dargestellt. Das Strahlenbündel zeigt sich in diesem Querschnitt als Strahlungsring 10 mit einem strahlungsfreien Zentralbereich.

Fig. 5 zeigt den prinzipiellen Aufbau der Resonatoreinheit 5 für die Vorrichtung gemäß der Erfindung, bestehend aus einer Sammellinse 12, einem ersten Resonatorspiegel 13, einem Spiegel 17 mit Loch 16, einem Fokussierspiegel 18 und einem zweiten Resonatorspiegel 19. Die Anordnung der Elemente zueinander soll zusammen mit der Wirkungsweise der Resonatoreinheit 5 erläutert werden.

Die Resonatoreinheit 5 ist der Strahlformungseinheit 4 in Strahlungsrichtung so nachgeordnet, dass deren erste Baugruppe, bestehend aus einer Sammellinse 12 und einem ersten Resonatorspiegel 13, in einer solchen Entfernung vom ersten Fokuspunkt 8 steht, dass der Strahlungsring 10 vollständig auf die Sammellinse 12 trifft und der erste Resonatorspiegel 13 vollständig im strahlungsfreien Zentralbereich steht. Dabei müssen die Sammellinse 12 und der erste Resonatorspiegel 13 nicht zwingend in einer Ebene stehen (der Fachmann weiß, dass immer die Hauptebenen gemeint sind, wenn davon gesprochen wird, dass optisch abbildende Elemente in einer Ebene stehen). Die Sammellinse 12 fokussiert das ringförmige Strahlenbündel auf die Oberfläche eines Werkstückes 14 bzw. in das Volumen eines Werkstückes 14 (Wechselwirkungsvolumen) in den zweiten Fokuspunkt 15, wobei die optimale Relativlage des zweiten Fokuspunktes 15 zum Werkstück 14 von der jeweiligen Arbeitsaufgabe abhängt. Nach diesem ersten Werkstück-Durchgang und damit der ersten Teilabsorption tritt das Strahlenbündel durch ein Loch 16 im Spiegel 17, das gerade ausreichend groß ist, um das nun wieder divergierende Strahlenbündel verlustfrei passieren zu lassen. Um dieses Loch 16 möglichst klein halten zu können, wird der Spiegel 17 in geringer Entfernung hinter dem Werkstück 14 platziert.
Auf seinem weiteren Weg trifft das Strahlenbündel auf den Fokussierspiegel 18, der sich in ausreichender Entfernung vom Werkstück 14 so weit hinter dem zweiten Fokuspunkt 15 befindet, so dass auch hier wieder ein strahlungsfreier Zentralbereich mit einem ausreichend großen Durchmesser gegeben ist, um dort den zweiten Resonatorspiegel 19 zu positionieren. Dieser zweite Resonatorspiegel 19 kann entweder fest am Fokussierspiegel 18 angebracht oder zur Sicherung weiterer Justierfreiheitsgrade der Anordnung frei justierbar sein. Im letzteren Fall muss der Fokussierspiegel 18 eine ausreichend große Öffnung besitzen, damit über eine entsprechende Justiereinheit 21, die hinter dem Fokussierspiegel 18, d. h. außerhalb des gesamten Strahlweges und folglich ohne dessen Beeinträchtigung angebracht ist, der zweite Resonatorspiegel 19 bei Bedarf verkippt oder auch längs der optischen Achse 9 verschoben werden kann. So ist eine Feineinstellung des eigentlichen Resonators, der durch den ersten Resonatorspiegel 13 und den zweiten Resonatorspiegel 19 gebildet wird, möglich.

Der weitere Strahlweg, nach Reflexion am Fokussierspiegel 18, macht die wichtige Funktion des Spiegels 17 deutlich. Er bereitet die Funktion des Resonators insofern vor, als er das vom Fokussierspiegel 18 nun wieder konvergent kommende Strahlenbündel in den dritten Fokuspunkt 20 lenkt. Es sei angemerkt, dass der Spiegel 17 nicht zwingend wie dargestellt ein Planspiegel sein muss, sondern bei Bedarf auch eine optische wirksame Krümmung aufweisen kann, z. B. wenn man die erforderliche sammelnde Wirkung, die die Strahlung im dritten Fokuspunkt 20 vereinigt, etwa gleichmäßig auf den Spiegel 17 und den Fokussierspiegel 18 aufteilen will. Der dritte Fokuspunkt 20, der in relativ geringer Entfernung vor dem zweiten Resonatorspiegel 19 liegt, spielt für den Resonator eine zentrale Rolle. Die Brennweite des zweiten Resonatorspiegels 19 und seine Entfernung zum dritten Fokuspunkt 20 sind so aufeinander abgestimmt, dass das Strahlenbündel ein zweites Mal in das Wechselwirkungsvolumen im Werkstück 14 fokussiert wird und nach der dort erfolgenden zweiten Teilabsorption als schlankes Strahlenbündel auf den ersten Resonatorspiegel 13 trifft. Wählt man dessen Brennweite nun so, dass die reflektierte Strahlung nach dem dritten Durchgang durch das Werkstück 14 wieder genau im dritten Fokuspunkt 20 gesammelt wird, ist die Voraussetzung für eine echte Resonatorfunktion, d. h. ein oftmaliges Hin- und Herlaufen der Strahlung zwischen den beiden Resonatorspiegeln 13 und 19 erfüllt. Durch die bei jedem Werkstückdurchgang erfolgende Absorption läuft sich das Bündel schließlich "tot", und auch bei schwacher Absorption wird die zur Verfügung stehende Strahlungsleistung weitgehend im zu bearbeitenden Material deponiert.
Ein ganz wesentlicher zweiter Vorzug ist die vollständige Vermeidung von Strahlungsanteilen, die in die Strahlungsquelle 6 zurücklaufen, so dass in dieser bevorzugten Ausführung der erfindungsgemäßen Anordnung auf spezielle Vorkehrungen zur Entkopplung der Strahlungsquelle 6 verzichtet werden kann.

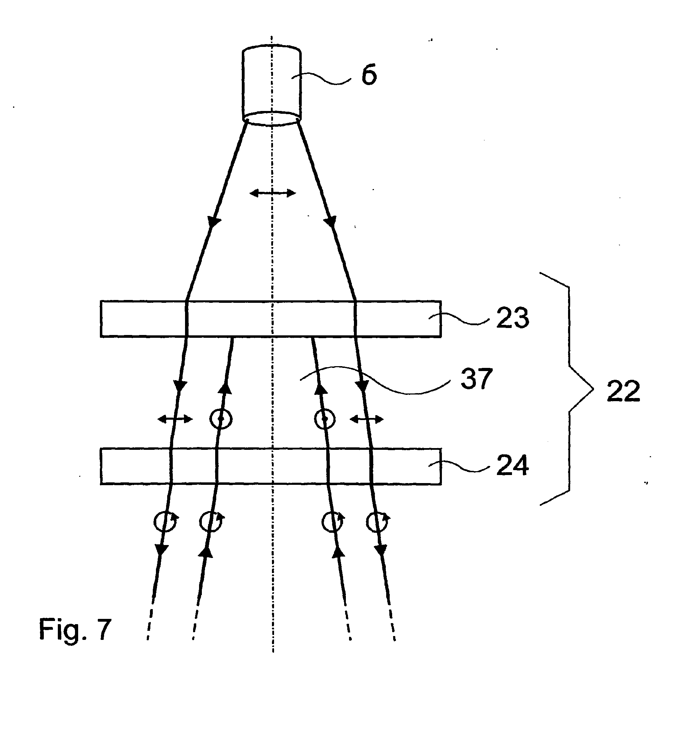

In einem zweiten Ausführungsbeispiel für eine erfindungsgemäße Vorrichtung soll das Strahlenbündel bei allen Durchtritten durch das Werkstück 14 im Wechselwirkungsvolumen fokussiert werden, um somit das Wechselwirkungsvolumen zu verkleinern und die Energie örtlich konzentrierter einzubringen. Die Brennweite des ersten Resonatorspiegels 13 muss hierfür so gewählt werden, dass das Strahlenbündel nicht im dritten Fokuspunkt 20, sondern ein drittes Mal im Werkstück 14 im zweiten Fokuspunkt 15 fokussiert wird. Diesen Vorzug erkauft man sich allerdings durch ein Zurücklaufen der nichtabsorbierten Reststrahlung in Richtung Strahlungsquelle 6 (dabei vierter fokussierter Durchgang durch Werkstück 14), da die Grundbedingung für die Resonatorfunktion nicht mehr erfüllt ist. In diesem Falle muss also eine spezielle Entkopplungseinheit 22 in Strahlungsrichtung hinter die Strahlungsquelle 6 gesetzt werden, wie beispielhaft in Fig. 7 gezeigt.
Die hier dargestellte Strahlungsentkopplungseinheit 22 setzt voraus, dass die Strahlungsquelle 6 linear polarisierte elektromagnetische Strahlung aussendet, was für die meisten Laser zutrifft. Bei der Darstellung in Fig. 7 wird angenommen, dass deren Polarisationsebene in der Zeichenebene liegt. Diese Strahlung durchsetzt ohne wesentliche Verluste den auf Durchgang eingestellten Polarisator 23 und trifft anschließend auf die unmittelbar hinter dem Polarisator 23 angeordnete λ/4-Platte 24. Diese beeinflusst die Polarisation in der Weise, dass aus dem ursprünglich linear polarisierten Strahlenbündel ein zirkular polarisiertes Strahlenbündel wird, das in Richtung des weiteren Strahlenganges läuft. Das nach dem mehrfachen Durchlaufen des Werkstückes 14 zurücklaufende Strahlenbündel besitzt im Wesentlichen noch die gleichen Polarisationseigenschaften, d. h. es ist ebenfalls noch zirkular polarisiert. Trifft nun dieses Strahlenbündel in der entgegengesetzten Laufrichtung auf die λ/4-Platte 24, wird der Polarisationszustand in der Weise verändert, dass aus der zirkular polarisierten wieder linear polarisierte Strahlung wird, allerdings nun mit einer um 90° gedrehten Polarisationsebene gegenüber dem ursprünglichen Strahlenbündel. Für Strahlung, die senkrecht zur Zeichenebene polarisiert ist, steht aber nun der Polarisator 23 in Sperrrichtung, so dass diese Strahlung am Durchgang gehindert wird und nicht in die Strahlungsquelle 6 rückkoppeln kann.

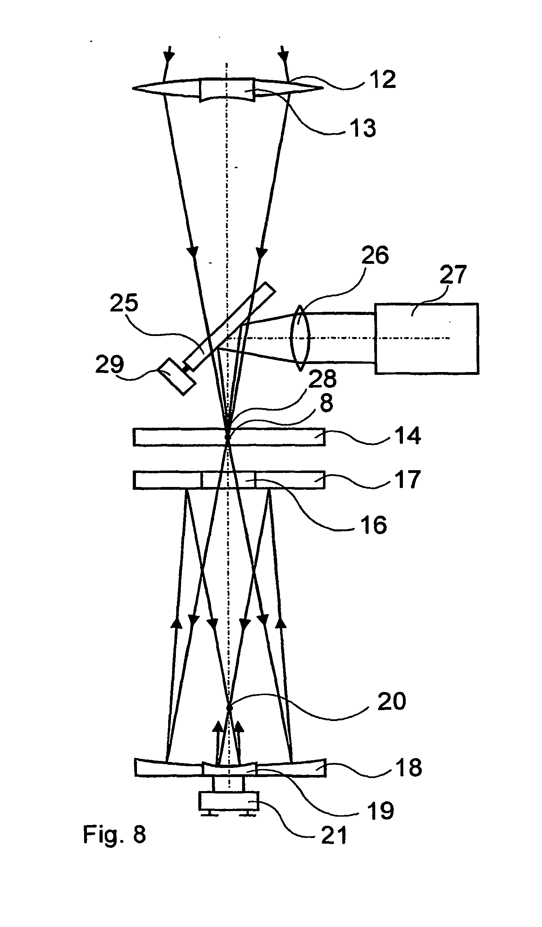

Ein drittes Ausführungsbeispiel soll anhand von Fig. 8 näher erläutert werden. Im Unterschied zum ersten Ausführungsbeispiel, dargestellt in Fig. 6, ist zwischen der Sammellinse 12 und dem Werkstück 14 eine Umlenkeinheit 25 eingebracht, mit der die über eine Linse 26 fokussierte Strahlung einer Zusatzstrahlungsquelle 27 in den Strahlengang der Gesamtanordnung eingekoppelt wird. Diese Zusatzstrahlung ist für die Erzeugung eines Startrisses beim Glastrennen vorgesehen. Die Zusatzstrahlungsquelle 27 ist vorzugsweise ein TEA-CO₂-Laser, dessen gepulste Strahlung hoher Impulsleistung und -energie von der Linse 26 scharf auf das Werkstück 14 fokussiert wird, wobei die Umlenkeinheit 25 dafür sorgt, dass dieser Zusatzfokus 28 genau am gewünschten Ort relativ zur Lage des Wechselwirkungsvolumens liegt. Um beliebige Lagen für den Zusatzfokus 28 einstellen zu können, ist die Umlenkeinheit 25 mit einer Justiereinrichtung 29 gekoppelt. Die Umlenkeinheit 25 kann vorteilhaft aus einer planparallelen Platte bestehen, die so beschichtet ist, dass sie für die Wellenlänge der einfallenden elektromagnetischen Strahlung der Strahlungsquelle 6 vollständig transparent ist und die Strahlung der Zusatzstrahlungsquelle 27 vollständig reflektiert.
Die Umlenkeinheit 25 kann auch ein einfacher Spiegel 17 für die Strahlung der Zusatzstrahlungsquelle 27 sein, der zur Startrisserzeugung in den Strahlengang geschoben oder eingeklappt und vor der eigentlichen Bearbeitung des Werkstückes 14, was in Verbindung mit einer Startrisserzeugung ein Trennen ist, wieder aus dem Strahlengang entfernt wird.

### Aufstellung der verwendeten Bezugszeichen

- 1: erstes Axicon
- 2.: Fokussierlinse
- 3: zweites Axicon
- 4: Strahlformungseinheit
- 5: Resonatoreinheit
- 6: Strahlungsquelle
- 8: erster Fokuspunkt
- 9: optische Achse
- 10: Strahlungsring
- 12: Sammellinse
- 13: erster Resonatorspiegel
- 14: Werkstück
- 15: zweiter Fokuspunkt
- 16: Loch
- 17: Spiegel
- 18: Fokussierspiegel
- 19: zweiter Resonatorspiegel
- 20: dritter Fokuspunkt
- 21: Justiereinheit
- 22: Strahlungsentkopplungseinheit
- 23: Polarisator
- 24: λ/4-Platte
- 25: Umlenkeinheit
- 26: Linse
- 27: Zusatzstrahlungsquelle
- 28: Zusatzfokus
- 29: Justiereinrichtung

- δ1: Kegelwinkel des ersten Axicons
- δ2: Kegelwinkel des zweiten Axicons
- a: Abstand

## Patentansprüche

1. Vorrichtung zum Einbringen von Strahlungsenergie in ein Werkstück (14) aus einem schwach absorbierenden Material mit einer Strahlungsquelle (6) und einer Resonatoreinheit (5), umfassend einen ersten Resonatorspiegel (13) und einen zweiten Resonatorspiegel (19), zwischen denen das Werkstück (14) angeordnet wird,
**dadurch gekennzeichnet,**
**dass** der Resonatoreinheit (5) eine Strahlformungseinheit (4) zur Erzeugung eines ringförmigen Strahlenbündels vorgeordnet ist, mit einer Fokussierlinse (2) und einem nachgeordneten ersten Axicon (1), welches mit der Fokussierlinse (2) auf einer gemeinsamen optischen Achse (9) angeordnet ist und dessen kegelförmige optische Fläche der Fokussierlinse (2) zugewandt ist, wobei vor der Fokussierlinse (2) ein zweites Axicon (3) mit seiner kegelförmigen optischen Fläche der Fokussierlinse (2) abgewandt auf der optischen Achse (9) angeordnet ist und die Parameter der Fokussierlinse (2) und der Axicons (1), (3) sowie deren Abstände zueinander so gewählt sind, dass ein von einer auf der optischen Achse (9), vor dem zweiten Axicon (3) stehenden Strahlungsquelle (6) kommendes, und die Strahlformungseinheit (4) durchlaufendes Strahlenbündel in ein in einem ersten Fokuspunkt (8) fokussiertes, anschließend divergierendes ringförmiges Strahlenbündel mit einem strahlungsfreien Zentralbereich geformt wird. und
der erste Resonatorspiegel (13) im strahlungsfreien Zentralbereich hinter dem ersten Fokuspunkt (8) steht,
**dass** eine Sammellinse (12) vorhanden ist, die den ersten Resonatorspiegel (13) umgibt und das auftreffende Strahlenbündel in das Werkstück (14) in einen zweiten Fokuspunkt (15) fokussiert,
**dass** der zweite Resonatorspiegel (19) in einem strahlungsfreien Zentralbereich hinter dem zweiten Fokuspunkt (15), umgeben von einem Fokussierspiegel (18) steht, der das aus dem zweiten Fokuspunkt (15) kommende divergierende Strahlenbündel in ein konvergierendes Strahlenbündel formt und auf einen Spiegel (17) reflektiert, der zwischen dem Fokussierspiegel (18) und dem Werkstück (14) angeordnet ist und das Strahlenbündel auf den zweiten Resonatorspiegel (19) reflektiert, dass der Spiegel (17) ein Loch (16) aufweist, das gerade so groß ist, dass das aus dem zweiten Fokuspunkt (15) kommende und in Richtung des Fokussierspiegels (18) laufende Strahlenbündel unbeeinflusst hindurchtreten kann und durch das das vom zweiten Resonatorspiegel (19) reflektierte Strahlenbündel unbeeinflusst hindurchtritt und ein zweites Mal innerhalb des Werkstückes (14) im zweiten Fokuspunkt (15) fokussiert wird, bevor es anschließend auf den ersten Resonatorspiegel (13) auftrifft und von diesem in das Werkstück (14) zurückreflektiert wird.

2. Vorrichtung nach Anspruch 1, **dadurch gekennzeichnet, dass** die Parameter des zweiten Resonatorspiegels (19) und des Fokussierspiegels (18) so gewählt sind, dass das vom Fokussierspiegel (18) reflektierte Strahlenbündel vor Auftreffen auf den zweiten Resonatorspiegel (19) in einen dritten Fokuspunkt (20) fokussiert wird, der über den zweiten Resonatorspiegel (19) in den zweiten Fokuspunkt (15) abgebildet wird und
dass die Parameter des ersten Resonatorspiegels (13) so gewählt sind, dass ein aus dem zweiten Fokuspunkt (15) kommendes, auf den ersten Resonatorspiegel (13) auftreffendes Strahlenbündel in den dritten Fokuspunkt (20) fokussiert wird.

3. Vorrichtung nach Anspruch 1, **dadurch gekennzeichnet, dass** die Parameter des zweiten Resonatorspiegels (19) und des Fokussierspiegels (18) so gewählt sind, dass das vom Fokussierspiegel (18) reflektierte Strahlenbündel wahlweise mit oder ohne Zwischenfokussierung nach Reflexion am zweiten Resonatorspiegel (19) ein zweites Mal, nach Reflexion am ersten Resonatorspiegel (13) ein drittes und nach der abermaligen Reflexion am zweiten Resonatorspiegel (19) ein viertes Mal in den zweiten Fokuspunkt (15) fokussiert wird und zwischen der Strahlungsquelle (6) und der Strahlformungseinheit (4) eine Strahlungsentkopplungseinheit (22) vorgeordnet ist, die eine Rückkopplung von Strahlungsanteilen auf die Strahlungsquelle (6) verhindert.

4. Vorrichtung nach Anspruch 2, **dadurch gekennzeichnet, dass** die Strahlungsquelle (6) linear polarisiertes Licht aussendet und die Strahlungsentkopplungseinheit (22) durch einen Polarisator (23) und eine λ/4-Platte (24) gebildet wird.

5. Vorrichtung nach Anspruch 1, **dadurch gekennzeichnet, dass** zur Erzeugung eines Startrisses eine Zusatzstrahlungsquelle (27) vorhanden ist, deren Zusatzstrahlung über eine Linse (26) und eine Umlenkeinheit (25) zeitweise in das Werkstück (14) fokussiert werden kann.

## Claims

1. Apparatus for introducing radiant energy into a workpiece (14) of a weakly absorbent material with a radiation source (6) and a resonator unit (5) including a first resonator mirror (13) and a second resonator mirror (19), between which the workpiece (14) is arranged, **characterised in that** arranged in front of the resonator unit (5) there is a beam shaping unit (4) for producing an annular beam with a focusing lens (2) and a first axicon (1) arranged behind it, which is arranged with the focusing lens (2) on a common optical axis (9) and whose conical optical surface is directed towards the focusing lens, whereby arranged on the optical axis (9) in front of the focusing lens (2) there is a second axicon (3) with its conical optical surface directed away from the focusing lens (2) and the parameters of the focusing lens (2) and of the axicons (1), (3) and their distances from one another are so selected that a beam, which emanates from a radiation source (6) situated on the optical axis (9) in front of the second axicon (3) and which passes through the beam shaping unit (4) is formed into an annular beam with a radiation-free central region which is focused at a first focus point (9) and then diverges and the first resonator mirror (13) is situated in the radiation-free central region behind the first focus point (8), that a collector lens (12) is present, which surrounds the first resonator mirror (13) and focuses the incident beam onto the workpiece (14) at a second focus point (15), that the second resonator mirror (19) is situated in a radiation-free central region behind the second focus point (15), surrounded by a focusing mirror (18), which forms the divergent beam emanating from the second focus point (15) into a convergent beam and reflects it onto a mirror (17), which is arranged between the focusing mirror (18) and the workpiece (14) and reflects the beam onto the second resonator mirror (19), that the mirror (17) has a hole (16), which is just large enough that the beam emanating from the second focus point (15) and moving in the direction of the focusing mirror (18) can pass through it uninfluenced and through which the beam reflected by the second resonator mirror (19) passes through uninfluenced and is focused for a second time within the workpiece (14) at a second focus point (15) before it then impinges on the first resonator mirror (13) and is reflected back by it into the workpiece (14).

2. Apparatus as claimed in Claim 1, **characterised in that** the parameters of the second resonator mirror (19) and of the focusing mirror (18) are so selected that the beam reflected by the focusing mirror (18) is focused before impinging on the second resonator mirror (19) at a third focus point (20), which is imaged by means of the second resonator mirror (19) at the second focus point (15) and that the parameters of the first resonator mirror (13) are so selected that a beam emanating from the second focus point (15) and incident on the first resonator mirror (13) is focused at the third focus point (20).

3. Apparatus as claimed in Claim 1, **characterised in that** the parameters of the second resonator mirror (19) and of the focusing mirror (18) are so selected that the beam reflected by the focusing mirror (18) is focused, selectively with or without intermediate focusing, after reflection at the second resonator mirror (19), for a second time, after reflection at the first resonator mirror (13) for a third time and, after the repeated reflection at the second resonator mirror (19), for a fourth time at the second focus point (15) and arranged in front between the radiation source (6) and the beam formation unit (4) there is a radiation decoupling unit (22), which prevents feedback of radiation components to the radiation source (6).

4. Apparatus as claimed in Claim 2, **characterised in that** the radiation source (6) emits linearly polarised light and the radiation decoupling unit (2) is constituted by a polariser (23) and a λ/4 plate (24).

5. Apparatus as claimed in Claim 1, **characterised in that** in order to produce a starter crack, an additional radiation source (27) is present, whose additional radiation can be focused temporarily in the workpiece (14) by means of a lens (26) and a deflecting unit (25).

## Revendications

1. Dispositif destiné à faire pénétrer de l'énergie de rayonnement dans une pièce (14) réalisée dans une matière faiblement absorbante, comportant une source de rayonnement (6) et une unité à résonateur (5) comprenant un premier miroir de résonateur (13) et un deuxième miroir de résonateur (19) entre lesquels est disposée la pièce (14),
**caractérisé**
**en ce que** est disposée en amont de l'unité à résonateur (5) une unité de formation de faisceau (4) destinée à générer un faisceau annulaire, comportant une lentille de focalisation (2) et un premier axicon (1) en aval de celle-ci, lequel est disposé sur un axe optique (9) commun à la lentille de focalisation (2) et dont la surface optique conique est orientée vers la lentille de focalisation (2), un deuxième axicon (3) étant disposé sur l'axe optique (9) en amont de la lentille de focalisation (2), avec sa surface optique conique détournée de la lentille de focalisation (2), et les paramètres de la lentille de focalisation (2) et des axicons (1), (3) ainsi que leur espacement étant choisis de telle sorte qu'un faisceau provenant de la source de rayonnement (6) disposée en amont du deuxième axicon (3) sur l'axe optique (9), et traversant l'unité de formation de faisceau (4) est formé en faisceau annulaire avec une zone centrale exempte de rayons, focalisé sur un premier point focal (8) avant de diverger, et
que le premier miroir de résonateur (13) est situé dans la zone centrale exempte de rayons derrière le premier point focal (8),
**en ce que** une lentille convergente (12) est prévue, laquelle entoure le premier miroir de résonateur (13) et focalise le faisceau pénétrant dans la pièce (14) sur un deuxième point focal (15),
**en ce que** le deuxième miroir de résonateur (19) est situé dans une zone centrale exempte de rayons derrière le deuxième point focal (15), entouré d'un miroir de focalisation (18) qui forme le faisceau divergent provenant du deuxième point focal (15) en un faisceau convergent qu'il réfléchit vers un miroir (17) disposé entre le miroir de focalisation (18) et la pièce (14) et réfléchissant le faisceau vers le deuxième miroir de résonateur (19),
**en ce que** le miroir (17) présente un trou (16) dont la grandeur est choisie pour permettre le passage libre du faisceau provenant du deuxième point focal (15) et dirigé vers le miroir de focalisation (18), et par lequel passe librement le faisceau réfléchi par le deuxième miroir de résonateur (19), celui-ci étant focalisé une deuxième fois à l'intérieur à l'intérieur de la pièce (14), sur le deuxième point focal (15), avant de rencontrer le premier miroir de résonateur (13) et d'être rétroréfléchi par celui-ci vers la pièce (14).

2. Dispositif selon la revendication 1, **caractérisé**
**en ce que** les paramètres du deuxième miroir de résonateur (19) et du miroir de focalisation (18) sont choisis de telle sorte que le faisceau réfléchi par le miroir de focalisation (18) est focalisé sur un troisième point focal (20) avant de rencontrer le deuxième miroir de résonateur (19), ledit point focal étant représenté sur le deuxième point focal (15) par le deuxième miroir de résonateur (19), et
**en ce que** les paramètres du premier miroir de résonateur (13) sont choisis de telle sorte qu'un faisceau provenant du deuxième point focal (15) et rencontrant le premier miroir de résonateur (13) est focalisé sur le troisième point focal (20).

3. Dispositif selon la revendication 1, **caractérisé**
**en ce que** les paramètres du deuxième miroir de résonateur (19) et du miroir de focalisation (18) sont choisis de telle sorte que le faisceau réfléchi par le miroir de focalisation (18) est focalisé une deuxième fois au choix avec ou sans focalisation intermédiaire après réflexion sur le deuxième miroir de résonateur (19), une troisième fois après réflexion sur le premier miroir de résonateur (13) et, après la nouvelle réflexion sur le deuxième miroir de résonateur (19), une quatrième fois sur le deuxième point focal (15), et en ce qu'une unité de découplage de rayonnement (22) est disposée en amont entre la source de rayonnement (6) et l'unité de formation de faisceau (4), laquelle empêche un rétrocouplage de parts de rayonnement vers la source de rayonnement (6).

4. Dispositif selon la revendication 2, **caractérisé**
**en ce que** la source de rayonnement (6) émet une lumière polarisée linéairement, et en ce que l'unité de découplage de rayonnement (22) est formée par un polarisateur (23) et une plaque λ/4 (24).

5. Dispositif selon la revendication 1, **caractérisé**
**en ce qu'**une source de rayonnement additionnel (27) est prévue pour la génération d'une fente initiale, dont le rayonnement additionnel peut être focalisé temporairement dans la pièce (14) par une lentille (26) et par une unité déflectrice (25).
